# EUROPÄISCHE PATENTSCHRIFT

(11) **EP 1 483 333 B1**
(45) Veröffentlichungstag und Bekanntmachung des Hinweises auf die Patenterteilung: **31.12.2008**
(21) Anmeldenummer: 03711917.9
(22) Anmeldetag: 04.03.2003
(51) Int. Cl.: C08L 101/00, C08K 13/04, C08K 7/14, C08K 5/50, C08K 5/56

(54) **THERMOPLASTICHE FORMMASSE UND DARAUS HERGESTELLTE FORMKÖRPER**
THERMOPLASTIC MOULDING MATERIAL AND MOULDED BODIES PRODUCED THEREFROM
MATIERE MOULABLE THERMOPLASTIQUE ET CORPS MOULES FABRIQUES A PARTIR DE LADITE MATIERE

(30) Priorität: 05.03.2002 DE 10209420
(43) Veröffentlichungstag der Anmeldung: 08.12.2004
(73) Patentinhaber: Ticona GmbH, 65451 Kelsterbach (DE)
(72) Erfinder: PAPKE, Nicolai, 55252 Mainz-Kastel (DE)
(86) Internationale Anmeldenummer: PCT/EP2003/002175
(87) Internationale Veröffentlichungsnummer: WO 2003/074612

(56) Entgegenhaltungen:
- EP-A- 0 320 654
- EP-A- 0 346 150
- EP-A- 0 494 445
- DE-A- 3 628 362
- PATENT ABSTRACTS OF JAPAN vol. 1995, no. 06, 31. Juli 1995 (1995-07-31) & JP 07 082441 A (NIPPON ZEON CO LTD;OTHERS: 01), 28. März 1995 (1995-03-28)
- PATENT ABSTRACTS OF JAPAN vol. 018, no. 328 (C-1215), 22. Juni 1994 (1994-06-22) & JP 06 073264 A (POLYPLASTICS CO), 15. März 1994 (1994-03-15)
- PATENT ABSTRACTS OF JAPAN vol. 1998, no. 08, 30. Juni 1998 (1998-06-30) & JP 10 060248 A (TEIJIN LTD), 3. März 1998 (1998-03-03)

## Beschreibung

Die vorliegende Erfindung betrifft neue thermoplastische Formmassen mit verbesserten mechanischen Eigenschaften.
Thermoplastische Kunststoffe sind kostengünstige Werkstoffe mit einem geringen spezifischen Gewicht, guter Schmelzbarkeit sowie Widerstandsfähigkeit gegen chemische Einflüsse. Diese werden daher vielfach in Bereichen, wie allgemeine Haushaltsartikel, elektrischen und elektronischen Teilen verwendet.
Es ist bekannt, thermoplastische Kunststoffe mit Verstärkungsmitteln, mit Füllstoffen und/oder mit Schlagzähmodifikatoren zu kombinieren, um deren mechanische Eigenschaften, wie Festigkeit oder Schlagzähigkeit, zu verbessern oder um deren Preis zu verringern.
Der Einsatz von Verstärkungsfasern bei thermoplastischen Kunststoffen ist beispielsweise aus den GB-A-2,225,584, JP-A-03/126,740, JP-A-02/107,664, JP-A-01/087,656740, JP-A-01/066,268, JP-A-63/305,148, JP-A-06/018,929, JP-A-60/104,136, JP-A-56/030,451, JP-A-63/222,266, JP-A-07/053,861 und JP-A-06/234,896 bekannt. In der EP-A- 494 445 wird eine Mischung, enthaltend thermoplastisches Polycarbonat, Kurzglasfasern und Dibutylzinnoxid, als Umesterungskatalysator, beschrieben. Die JP-A-06073264 beschreibt die Kombination von Polyestern mit ausgewählten, modifizierten Polyolefinen, ausgewählten Epoxidverbindungen und ggf. Füll- und Verstärkungsstoffe.

Der Einfluss von Zusatzstoffen auf die Eigenschaften der Formmasse wird durch die Anbindung des Zusatzstoffes an die Kunststoffmatrix beeinflusst. Oft sind daher manche Zusatzstoffe nicht für alle Kunststoffe geeignet, oder sie werden mit Schlichten versehen, die eine verbesserte Anbindung an die Kunststoffmatrix bewirken.

Dabei werden die Zusatzstoffe, insbesondere Verstärkungsfasern, mit Schlichten überzogen, und diese geschlichteten Zusatzstoffe werden nach Trocknung der Schlichte in das geschmolzene Polymer eingearbeitet. Häufig wird zusätzlich zur Schlichte noch ein Haftvermittler eingesetzt, der die Haftung zwischen der Grenzfläche des Zusatzstoffes und der Polymermatrix verbessern soll. Diese Vorgehensweise ist jedoch oft nicht ausreichend.

Nachteilig bei der Verwendung von Schlichten oder Haftvermittlern bei der Herstellung von gefüllten und/oder verstärkten und/oder schlagzäh-modifizierten Formmassen ist eine häufig noch nicht genügende Verbindung von Polymermatrix mit dem betreffenden Zusatzstoff. Wünschenswert ist eine möglichst gute Verbindung zwischen diesen Komponenten der Formmasse.

Ausgehend von diesem Stand der Technik bestand die Aufgabe der vorliegenden Erfindung in der Bereitstellung von gefüllten und/oder verstärkten und/oder schlagzäh-modifizierten Formkörpern aus thermoplastischen Kunststoffen, die eine verbesserte Anbindung der Phase des Zusatzstoffes an die Kunststoffmatrix aufweisen. Diese verbesserte Anbindung äußert sich in einer erhöhten Grenzflächenhaftung und - abhängig von der Art des Zusatzstoffes - in verbesserten mechanischen Eigenschaften des Formkörpers und/oder einer verbesserten Verteilung des Zusatzstoffes in der Polymermatrix.

Eine weitere Aufgabe der vorliegenden Erfindung bestand in der Bereitstellung von gefüllten und/oder verstärkten und/oder schlagzäh-modifizierten Formkörpern aus thermoplastischen Kunststoffen sowie von Formmassen zur Herstellung derartiger Formkörper, bei denen der Kunststoff durch die zugesetzten Additive nur geringe Schädigung erleidet, die höhere Beständigkeit und Alterungsbeständigkeit und geringe Emission aufweist.

Diese Aufgaben werden durch die nachstehend beschriebenen Zusammensetzungen und Formkörper gelöst.

Die vorliegende Erfindung betrifft eine thermoplastische Formmasse enthaltend
a) 20 bis 99 Gew.-% eines thermoplastischen Polymeren, das ausgewählt wird aus der Gruppe bestehend aus Polyolefinen, Polyacrylaten, Polymethacrylaten, durch Polymerisation von Estern und/oder Amiden der Acrylsäure oder Methacrylsäure erhältlichen Polymeren sowie deren Copolymeren, Polyamiden, Polyestern, ausgenommen Polycarbonat, Polyethern, Polythioethern, Polyphenylenoxiden, Polyarylensulfiden oder deren Mischungen,
b) 0,1 Gew.-% - 80 Gew.-% eines Zusatzstoffes ausgewählt aus der Gruppe bestehend aus Füllstoffen, Verstärkungsstoffen, Schlagzähmodifikatoren und deren Gemischen, und
c) 0,00001 bis 1,0 Gew.-% eines Phosphans, Sulfoniumsalzes oder Titanylverbindung und/oder 0,00001 bis 0,03 Gew.-% eines Phosphoniumsalzes oder Ammoniumsalzes oder deren Mischungen als Katalysator, der die Ausbildung von kovalenten Bindungen zwischen dem thermoplastischem Polymeren und der Oberfläche des Zusatzstoffes katalysiert.

In einer weiteren bevorzugten Ausführungsform betrifft die vorliegende Erfindung eine langfaserverstärkte Formmasse enthaltend
a) 20 Gew.-% - 90 Gew.-% eines thermoplastischen Polymeren, das ausgewählt wird aus der Gruppe bestehend aus Polyolefinen, Polyacrylaten, Polymethacrylaten, durch Polymerisation von Estern und/oder Amiden der Acrylsäure oder Methacrylsäure erhältlichen Polymeren sowie deren Copolymeren, Polyamiden, Polyestern, ausgenommen Polycarbonat, Polyethern, Polythioethern, Polyphenylenoxiden, Polyarylensulfiden oder deren Mischungen,
b) 10 Gew.-% - 80 Gew.-% einer Verstärkungsfaser,
c) 0,00001 bis 1,0 Gew.-% eines Phosphans, Sulfoniumsalzes oder Titanylverbindung und/oder 0,00001 bis 0,03 Gew.-% eines Phosphoniumsalzes oder Ammoniumsalzes oder deren Mischungen als Katalysator, der die Ausbildung von kovalenten Bindungen zwischen dem thermoplastischem Polymeren und der Oberfläche des Zusatzstoffes katalysiert.

Eine derartige Formmasse weist eine ausgezeichnete Einbindung des Zusatzstoffes in die Polymermatrix auf, was sich durch hohe Festigkeit, ausgezeichnete Schlagzähigkeit sowie hohe Bruchdehnung und Bindenahtfestigkeit bemerkbar macht.

Als Katalysatoren gemäß der Erfindung eingesetzt werden können prinzipiell alle Verbindungen, die eine chemische Reaktion katalysieren, bei der sich kovalente Bindungen zwischen dem Matrixpolymeren und dem Zusatzstoff ausbilden. Dabei kann es sich sowohl um die Umsetzung von reaktiven Gruppen des Matrixpolymeren mit reaktiven Gruppen auf der Oberfläche des Zusatzstoffes handeln. Es kann sich aber auch um chemische Reaktionen handeln, bei denen zwischen eingesetzten Haftvermittlern und Polymermatrix und/oder Oberfläche des Zusatzstoffes kovalente Bindungen ausgebildet werden oder bei denen sich kovalente Bindungen zwischen zwei Teilen eines Haftvermittlers ausbilden, von denen das eine Teil mit dem Matrixpolymeren und das andere Teil mit der Oberfläche des Zusatzstoffes verträglich ist.

Beispiele für erfindungsgemäß katalysierte Reaktionen zur Ausbildung von kovalenten Bindungen zwischen dem thermoplastischen Matrixpolymeren und der Oberfläche des Zusatzstoffes sind alle Reaktionen, bei denen sich zwischen gleichen oder unterschiedlichen reaktiven Gruppen kovalente Bindungen ausbilden.

Beispiele für reaktive Gruppen sind Hydroxyl-, Thiol-, Mercaptan-, Amin-, Ester-, Amid-, Anhydrid-, Carboxyl-, Carbonat-, Sulfonsäure-, Epoxid-, Urethan-, Thiourethan-, Isocyanat-, Allophanat-, Harnstoff-, Biureth-, Lacton-, Lactam-, Oxazolidin-, Carbodiimidgruppen und Halogenatome.

Beispiele für chemische Reaktionen sind Reaktionen zwischen gleichen reaktiven Gruppen, wie Umesterungs-, Umamidierungs- oder Umurethanisierungsreaktionen; oder Reaktionen zwischen unterschiedlichen reaktiven Gruppen, wie Ester-, Amid-oder Urethanbildung oder Ausbildungen von Kohlenstoff-Kohlenstoff Bindungen.

Als erfindungsgemäß eingesetzte Katalysatoren kommen vorzugsweise Verbindungen in Frage, die Umesterungs-, Umamidierungs- oder Umurethanisierungsreaktionen katalysieren oder die die Ausbildung von Ester-, Amid- und Urethangruppen katalysieren.

Vorteilhaft werden Lewis-Säuren eingesetzt, die besonders bevorzugt keine Brönsted-Säuren sind.

Als Katalysatoren werden erfindungsgemäß Mengen von 0,00001 bis 1,0 Gew.-%, eines Phosphans, Sulfoniumsalzes oder Titanylverbindung, bevorzugt 0,0005 bis 0,5 Gew.-%, insbesondere bevorzugt 0,0007 bis 0,01 Gew.-%, und/oder 0,00001 bis 0,03 Gew.-%, bevorzugt 0,0007 bis 0,01 Gew. %, insbesondere bevorzugt 0,0007 bis 0,005 Gew. % eines Phosphoniumsalzes oder Ammoniumsalzes oder deren Mischungen als Katalysator eingesetzt.
Insbesondere bevorzugt ist der Einsatz von 0,00001 bis 0,03 Gew.-% Katalysator der ausgewählt wird aus der Gruppe bestehend aus Phosphoniumsalzen, Phosphanen, Ammoniumsalzen, Sulfoniumsalzen und deren Mischungen.

Beispiele für geeignete Katalysatoren sind MgX₂, BiX₃, SnX₄, SbX₅, FeX₃, GaX₃, HgX₂, ZnX₂, AlX₃, PX₃, TiX₄, MnX₂, ZrX₄, [R₄N]⁺_{q} A^{q-}, [R₄P]⁺_{q} A^{q-}, wobei X ein Halogenatom, also I, Br, Cl, F und/oder eine Gruppe -O-R oder -R sein kann, wobei R Alkyl oder Aryl bedeutet, q eine ganze Zahl von 1 bis 3 bedeutet und A ein q-wertiges Anion ist, beispielsweise Halogenid, Sulfat oder Carboxylat.

Auch Mischungen verschiedener Katalysatoren können eingesetzt werden.

Titanylverbindungen weisen vorzugsweise die Struktur [Ml^{p+}]ₛ [TiO]²⁺ [A^{r-}]ₜ auf, worin p 1 oder 2 bedeutet, s 0, 1 oder 2 ist, Ml ein ein- oder zweiwertiges Metall ist, A ein r-wertiges Anion darstellt, r und t unabhängig voneinander 1 oder 2 bedeuten, wobei der Ausdruck s x p+2 dem Ausdruck r x t entspricht. Vorzugweise sind p=1, s=0 oder 2, r= 1 oder 2 und t=2.

Titanylverbindungen weisen vorzugsweise die Struktur [Ml^{p+}]ₛ [TiO]²⁺ [A^{r-}]ₜ auf, worin p 1 oder 2 bedeutet, s 0, 1 oder 2 ist, Ml ein ein- oder zweiwertiges Metall, A ein r-wertiges Anion darstellt, r und t unabhängig voneinander 1 oder 2 bedeuten, wobei der Ausdruck s x p+2 dem Ausdruck r x t entspricht. Vorzugweise sind p=1, s=2, r=2 und t=2.

Ml ist vorzugsweise ein Alkalimetallkation. A ist vorzugsweise ein Anion einer ein-oder zweiwertigen Carbonsäure, wie Essigsäure oder Oxalsäure.

Ein Beispiel für eine bevorzugt eingesetzte Titanylverbindung ist Kalium-titanyl-bisoxalat (K₂[C₄O₉]Ti).

Besonders vorteilhaft einsetzbar als Katalysator gemäß der Erfindung sind Phosphoniumsalze.

Bevorzugt eingesetzte Phosphoniumsalze gemäß der Erfindung sind Verbindungen der allgemeinen Formel II 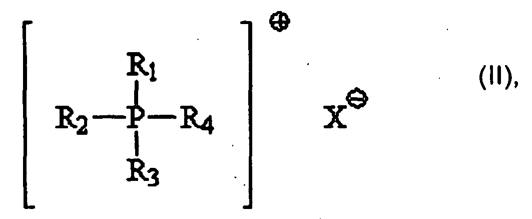 wobei R₁, R₂, R₃ und R₄ gleich oder unterschiedlich sind und einwertige organische Reste sind.

Die Reste R₁ bis R₄ können im Einzelnen sein Alkylreste mit ein bis zwanzig Kohlenstoffatomen, die gegebenenfalls substituiert sind, beispielsweise mit ein oder mehreren Hydroxyl- oder Alkoxygruppen und/oder mit Halogenatomen, wie Methyl, Ethyl, Hydroxyethyl, Propyl, Butyl, Dodecyl, Hexadecyl, oder Stearyl; aromatische Gruppen, die gegebenenfalls substituiert sind, beispielsweise mit ein oder mehreren Hydroxyl-, Alkoxy- und/oder Alkylgruppen und/oder mit Halogenatomen, wie Phenyl oder Naphthyl, sowie kondensierte aromatische Reste, die beispielsweise abgeleitet sind von 2-Halomethylnaphthalin, 9-Halomethylanthracen und 9-Halomethylphenanthren; araliphatische Gruppen, die gegebenenfalls substituiert sind, beispielsweise mit ein oder mehreren Hydroxyl-, Alkoxy- und/oder Alkylgruppen und/oder mit Halogenatomen, wie Benzyl.

R₁ bis R₄ können vorzugsweise gleich oder verschieden sein und Alkylreste mit 1 bis 20 Kohlenstoffatomen, vorteilhaft 2 bis 10 Kohlenstoffatomen, insbesondere 3 bis 8 Kohlenstoffatomen darstellen.
X kann ein Halogenatom, also 1, Br, Cl, F und/oder eine Gruppe -O-R oder -R sein, wobei R Alkyl oder Aryl bedeutet.

Beispiele besonders bevorzugter Phosphoniumsalze sind (1-Acetylamino-2-phenyl-vinyl)-triphenyl-phosphoniumperchlorat, (1-Benzoylamino2,2-bis-(4-chlorphenylsulfanyl)-vinyl)-triphenyl-phosphoniumchlorid, (1- Benzoylamino-2,2-bis-ethylsulfanyl-vinyl)-triphenylphosphoniumchlorid, (1- Benzoylamino-2,2-bis-phenylsulfanyl-vinyl)-triphenylphosphoniumchlorid, (1- Benzoylamino-2,2dichlor-vinyl)-triphenylphosphoniumchlorid, (1-Benzoylamino -2,2-dichlor-vinyl)-triphenylphosphoniumiodid, (1- Benzoylamino -2-(4-chlorphenyl)-vinyl)-triphenylphosphoniumchlorid, (1- Benzoylamino -2-(4-chlor- phenylsulfanyl)-vinyl)-triphenylphosphoniumchlorid, (1- Benzoylamino -2-(4-nitrophenyl)-vinyl) triphenylphosphoniumchlorid, (1- Benzoylamino -2-chlor-vinyl)-triphenylphosphoniumchlorid, (1Benzoylamino -2-chlor-2-ethylsulfanyl-vinyl)-triphenylphosphoniumchlorid, Tetraphenylphosphoniumchlorid, Tetrabutylphosphoniumchlorid, Dimethylbehenylphosphoniumchlorid, Trimethyldodecylphosphoniumchlorid, Trimethyloctadecyl-phosphoniumchlorid, Trimethylhexadecylphosphoniumchlorid; Tetrabutylphosphoniumchlorid, Stearyltributylphosphoniumchlorid Tetraethylphosphoniumbromid, Tetrabutylphosphoniumbromid, Dimethylbehenylphosphoniumbromid, Trimethyldodecylphosphoniumbromid, Trimethyloctadecylphosphoniumbromid Trimethylhexadecylphosphoniumbromid, Tetrabutylphosphoniumbromid, Stearyltributylphosphoniumbromid.

Ganz besonders bevorzugte Phosphoniumsalze tragen als mindestens einen der Reste R₁ bis R₄ einen Arylrest, vorteilhaft mindestens einen Phenylrest, wie zum Beispiel Tetraphenylphosphoniumchlorid oder Tetraphenylphosphoniumbromid.

Insbesondere bevorzugte Phosphoniumsalze enthalten als Reste R₁ bis R₄ sowohl aromatische als auch aliphatische Reste, insbesondere drei Arylreste, beispielsweise Phenylreste.

Beispiele für diese letztgenannte Gruppe sind Ethyltriphenylphosphoniumchlorid, Ethyltriphenylphosphoniumbromid.

Weitere geeignete Verbindungen sind dem Fachmann bekannt, leicht erhältlich und beispielsweise unter http://www.sigma-aldrich.com zu finden.

Ebenfalls einsetzbar als Katalysator sind die analog zu Formel II definierten Ammonium- und Sulfoniumsalze sowie Phosphane.

Bevorzugte Phosphane sind Verbindungen der allgemeinen Formel III 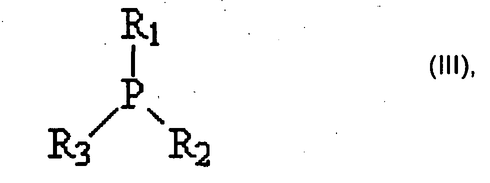 wobei die Reste R₁ bis R₃ gleich oder verschieden sein können und analog zu den Resten R₁ bis R₃ der in Formel II dargestellten Phosphoniumsalze definiert sind.

Besonders vorteilhaft ist Triphenylphosphan, P(C₆H₅)₃.

Die Ammonium- und Sulfoniumsalze, Phosphane sowie insbesondere die Phosphoniumsalze können besonders vorteilhaft in Mengen von 0,0005 bis 0,025 Gew.-%, ganz besonders vorteilhaft von 0,0007 bis 0,005 Gew.-% eingesetzt werden.

Da bei sehr geringen Konzentrationen die Durchmischung und homogene Verteilung jedoch schwieriger wird (meist bei Mengen deutlich unterhalb von 5 ppm), werden diese Verbindungen jedoch meist in Mengen von 0,001 bis 0,003 Gew.-% verwendet.

Thermoplastische Polymere, im Sinne der Erfindung, werden ausgewählt aus der Gruppe bestehend aus Polyolefinen, Polyacrylaten, Polymethacrylaten, durch Polymerisation von Estern und/oder Amiden der Acrylsäure oder Methacrylsäure erhältliche Polymere sowie deren Copolymere, Polyamiden, Polyestern, ausgenommen Polycarbonat, Polyethern, Polythioethern, Polyphenylenoxiden, Polyarylensulfiden oder deren Mischungen,

### Beispielhaft seien genannt:

Polylactone, wie Poly(pivalolacton) oder Poly(caprolacton); Polyether, und Polyetherketone; Polyamide, wie Poly-(4-amino-butanoat), Poly-(hexamethylen-adipamid), Poly-(6-aminohexanoat), Poly-(m-xylylen-adipamid), Poly-(p-xylylen-sebacamid), Poly-(2,2,2-trimethylhexamethylen-terephthalamid), Poly-(metaphenylen-isophthalamid) (NOMEX) und Poly-(p-phenylen-terephthalamid) (KEVLAR);
Polyester, wie Poly-(ethylen-1,5-naphthalat), Poly-(1,4-cyclohexandimethylen-terephthalat), Poly-(ethylen-oxybenzoat) (A-TELL), Poly-(para-hydroxybenzoat) (EKONOL), Poly-(1,4-cyclohexyliden-dimethylenterephthalat) (KODEL), Polyethylenterephthalat und Polybutylenterephthalat; Poly(arylenoxide), wie Poly-(2,6-dimethyl-1,4-phenylenoxid) und Poly-(2,6-diphenyl-1,4phenylenoxid);
Flüssigkristalline Polymere, wie die Polykondensationsprodukte aus der Gruppe der Monomeren, die besteht aus Terephthalsäure, Isophthalsäure, 1,4-Naphthalindicarbonsäure, 2,6-Napthalindicarbonsäure, 4,4'-Biphenyl-dicarbonsäure, 4-Hydroxybenzoesäure, 6-Hydroxy-2-naphthalin-dicarbonsäure, Hydrochinon, 4,4'-Dihydroxybiphenyl und 4-Aminophenol;
Poly-(arylensulfide), wie Poly-(phenylensulfid), Poly-(phenylen-sulfid-keton) und Poly(phenylen-sulfid-sulfon);
Polyetherimide;
Polyacrylderivate, wie Polyacrylat sowie Polymethacrylat und deren Copolymere sowie Derivate, wie Ester, beispielsweise Polyethylacrylat, Poly-(n-butylacrylat), Poly-(methylmethacrylat), Poly-(ethylmethacrylat), Poly(n-butylmethacrylat), Poly(n-propylmethacrylat), Polyacrylnitril, wasserunlösliche Ethylen-Acrylsäure-Copolymere, wasserunlösliche Ethylen-Vinyl-Alkohol-Copolymere, Acrylnitril-Copolymere, Methylmethacrylat-Styrol-Copolymere, Ethylen-Ethylacrylat-Copolymere und Acryl-Butadien-Styrol Copolymere;
Polyolefine, wie Poly(ethylen), z.B. Low Densitiy Poly(ethylen) (LDPE); Linear Low Density Poly(ethylen) (LLDPE) oder High Densitiy Poly(ethylen) (HDPE); Poly(propylen), chloriertes Poly(ethylen), z.B. chloriertes Low Density Poly(ethylen); Poly(4-methyl-1-penten), und Poly(styrol);
Wasserunlösliche lonomere; Poly(epichlorhydrin);
Furan Polymere, wie Poly(furan);
sowie alle Mischungen und Legierungen (mischbare und unmischbare Blends) von zwei oder mehreren der genannten Polymere.

Thermoplastische Polymere im Sinne der Erfindung umfassen auch thermoplastische Elastomere, die sich beispielsweise von einem oder mehreren der folgenden Polymere ableiten:

Polyesterelastomere, thermoplastische Butadien/Acrylnitril Elastomere, thermoplastisches Poly(butadien), thermoplastisches Poly(isobutylen), Ethylen-propylen-Copolymere, thermoplastische Ethylen-propylen-dien Terpolymere, thermoplastische sulfonierte Ethylen-Propylen-Dien Terpolymere, Poly(chloropren), thermoplastisches Poly(2,3-dimethylbutadien), thermoplastisches Poly(butadien-pentadien), chlorsulfoniertes Poly-(ethylen), Blockcopolymere, aufgebaut aus Segmenten amorpher oder (teil)kristalliner Blöcke, wie Poly(styrol), Poly(vinyltoluol), Poly(t-butylstyrol), und Polyester, und elastomerer Blöcke wie Poly(butadien), Poly(isopren), Ethylen-Propylen Copolymere, Ethylen-Butylen-Copolymere, Ethylen-Isopren-Copolymere und deren hydrierte Abkömmlinge, wie zum Beispiel SEBS, SEPS, SEEPS, und auch hydrierte Ethylen-Isopren-Copolymere mit erhöhtem Anteil an 1,2-verknüpftem Isopren, Polyether, Styrol-Polymere, wie ASA (Arylnitril-Styrol-Acrylester), ABS (Acrylnitril-Butadien-Styrol) oder PC/ABS (Polycarbonat / ABS) und ähnliche, wie zum Beispiel die von Kraton Polymers unter dem Handelsnamen KRATONO vertriebenen Produkte, sowie alle Mischungen und Legierungen (mischbare und unmischbare Blends) von zwei oder mehreren der genannten Polymere.

Es können auch vorteilhaft Blockcopolymere eingesetzt werden, die Blöcke mit funktionellen Gruppen enthalten, die mit den Zusatzstoffen reagieren können.

Ebenso vorteilhaft einsetzbar als Matrixpolymer oder insbesondere als Zusatz zum Matrixpolymer sind Pfropf-Copolymere, bei denen sich funktionelle Gruppen, die eine der oben erwähnten Reaktionen, wie Umesterungsreaktionen, eingehen in einer Seitenkette befinden; insbesondere sind dies modifizierte Polyolefine, insbesondere modifiziertes Polyethylen oder modifiziertes Polypropylen. Das modifizierte Polyolefin enthält vorzugsweise mindestens eine der folgenden Gruppen: Carboxyl-, Carboxylanhydrid-, Metallcarboxylat-, Carboxylester-, lmino-, Amino- oder Epoxygruppe mit vorteilhaft 1 bis 50 Gew. %.

Beispiele für derartige, funktionelle Gruppen aufweisende Polyolefin-Kunststoffe umfassen modifizierte Polyolefin-Copolymere oder gepfropfte Copolymere, die hergestellt werden, indem chemisch folgende beispielhaft aufgeführte Verbindungen, wie Maleinsäureanhydrid, Zitronensäureanhydrid, N-Phenylmaleimid, N-Cyclohexylmaleinimid, Glycidylacrylat, Glycidylmethacrylat, Glycidylvinylbenzoat, N-[4-(2,3-epoxpropoxy)-3,5-dimethylbenzyl]-acrylamid (AXE), Alkyl(meth)acrylate auf Polyolefine, wie Polypropylen, Polyethylen oder Ethylen/Propylen-Copolymere, oder auf Polyamid gepfropft werden. Das modifizierte Polymer ist im Polymerisationsgrad nicht beschränkt, es kann auch ein . Oligomer sein.

Besonders bevorzugte modifizierte Polyolefine sind-Maleinsäureanhydrid-modifiziertes Polyethylen, Maleinsäureanhydrid-modifiziertes Polypropylen, Maleinsäureanhydrid-modifiziertes Polyethylen/Polypropylen-Copolymer, Glycidylmethacrylat-modifiziertes Polyethylen, Glycidylmethacrylat-modifiziertes Polypropylen, AXE-modifiziertes Polyethylen, AXE-modifiziertes Polypropylen und Polyamid gepfropfte Polyolefine.

Ganz besonders vorteilhaft einsetzbar sind Polymere, die durch Umesterungsreaktionen, Umamidierungsreaktionen oder Umurethanisierungsreaktionen erhältlich sind, oder deren wiederkehrende Einheit mindestens eine Gruppe enthält, die eine derartige Reaktion oder eine ähnliche Reaktion eingehen kann.

Die besonders vorteilhaft einsetzbaren thermoplastischen Polymere, die funktionelle Gruppen enthalten, die Umesterungs-, Umamidierungs- oder Umurethanisierungsreaktionen eingehen können, lassen sich vorteilhaft in Mischung mit Polymeren einsetzen, die keine funktionellen Gruppen enthalten, die keine derartigen Reaktionen eingehen können, so dass deren Anbindung an den Zusatzstoff verbessert wird.

Vorteilhaft einsetzbar zur Herstellung von beispielsweise kurzfaserverstärkten thermoplastischen Kunststoffstrukturen unter Verwendung von Polypropylen ist daher der Zusatz mindestens eines modifizierten Polyolefins und/oder Polyamides zu dem zu verwendenden Polypropylen.

Ganz besonders vorteilhaft zu verwendende thermoplastische Polymere sind, Polyamide, Polyester, Polycarbonate, Polyarylensulfide und modifiziertes Polyolefin sowie Blends und Legierungen aus Polypropylen mit mindestens einem der vorgenannten ganz besonders vorteilhaft zu verwendenden thermoplastischen Polymer.

Bevorzugte erfindungsgemäß eingesetzte thermoplastische Polymere sind die an sich bekannten thermoplastischen Polyarylensulfide. Geeignete Materialien werden zum Beispiel beschrieben in Saechtling, Kunststoff-Taschenbuch, Hanser-Verlag, 27. Ausgabe, auf den Seiten 495 bis 498, worauf Bezug genommen wird.

Erfindungsgemäß wird als Polyarylensulfid bevorzugt Polyphenylensulfid eingesetzt.

Polyphenylensulfid (PPS), ist ein teilweise kristallines Polymer mit der allgemeinen Formel IV: 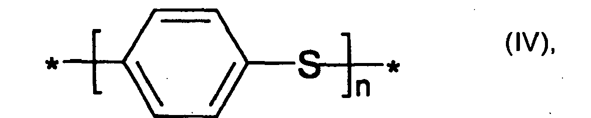 wobei n > 1 ist und das Polymer mindestens eine Molmasse (M_{w}) von größer 200 g/mol besitzt.

Weitere bevorzugt eingesetzte thermoplastische Polymere sind Polyester, die polymerisierte Einheiten enthalten, die abgeleitet sind von Estern mindestens einer aromatischen Dicarbonsäure, insbesondere Terephthalsäure, Isophthalsäure oder 2,6-Naphthalindicarbonsäure und von mindestens einem aliphatischen Diol, insbesondere Ethylenglycol, 1,3-Propandiol oder 1,4-Butandiol, oder welche polymerisierte Einheiten von Tetrahydrofuran enthalten. Beispiele geeigneter Polyester gemäß der Erfindung sind beschrieben in Ullmann's Encyclopedia of Ind. Chem., ed. Barbara Elvers, Vol. A24, Polyester section (Seiten. 227 - 251) VCH Weinheim-Basel-Cambridge-New-York (1992), worauf Bezug genommen wird.

Insbesondere vorteilhaft sind Polyester, wie Polyethylenterephthalat, Polybutylenterephthalat und Copolyester, die Butylenterephthalateinheiten und Butylenisophthalateinheiten enthalten.

Die Polyester können auch modifiziert sein indem bei der Polykondensation kleine Mengen an aliphatischen Dicarbonsäuren zugesetzt wurden, wie zum Beispiel Glutarsäure, Adipinsäure oder Sebazinsäure, oder indem Polyglycole zugesetzt wurden, wie beispielsweise Diethylenglycol oder Triethylenglycol, oder andere höhermolekulare Polyethylenglycole. Die Polyester können außerdem andere polymerisierte Einheiten enthalten, die von Hydroxycarbonsäuren abgeleitet sind, insbesondere von Hydroxybenzoesäure oder von Hydroxynaphthalincarbonsäure.

Die gemäß der Erfindung geeigneten Polyamide sind beispielsweise beschrieben in Sächtling, Kunststoff-Taschenbuch, 27. Ausgabe 1998, Hanser Verlag, auf den Seiten 465 bis 478, worauf Bezug genommen wird.

Bevorzugte Polyamide haben die allgemeine Formel VII 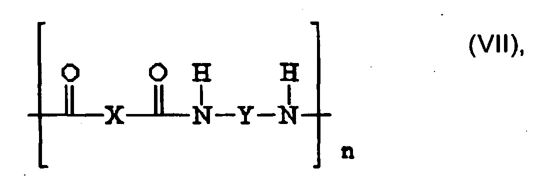 wobei X und Y gleich oder verschieden sein können und ein zweiwertiger aromatischer und/oder aliphatischer Kohlenwassersteoffrest sind. Bei den zweiwertigen aromatischen Kohlenwasserstoffresten handelt es sich in der Regel um Rest mit meta- oder para-Verknüpfung, die gegebenenfalls substituiert sind, beispielsweise mit Alkylgruppen oder Halogenatomen. Die aliphatischen Kohlenwasserstoffreste sind vorzugsweise linear und unverzweigt oder aber zyklisch. Vorzugsweise sind die aliphatischen Kohlenwasserstoffreste linear und unverzweigt und weisen 4 bis 13 Kohlenstoffatome auf.

Besonders bevorzugt werden Polyamide eingesetzt, worin X ein linearer, aliphatischer Kohlenwasserstoffrest mit 4, 7, 8 oder 10 Kohlenstoffatomen ist und in welchen Y ein linearer, aliphatischer Kohlenwasserstoffrest mit 4 oder 6 Kohlenstoffatomen bedeutet.

In einer weiteren vorteilhaften Ausgestaltung bedeutet X einen meta- und/oder para-Phenylenrest und Y einen linearen, aliphatischen Kohlenwasserstoffrest mit 6 Kohlenstoffatomen und/oder einen 2,2,Dimethyl-4-methyl-hexylrest.

n ist größer als eins, vorzugsweise zwischen 2 und 1000, insbesondere zwischen 80 und 100.

Weitere vorteilhafte Polyamide haben die allgemeine Formel VIII 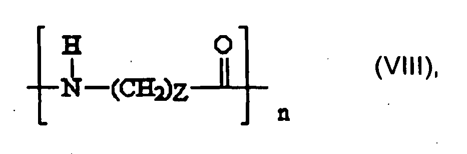 worin Z 5, 10 oder 11 bedeutet und n größer ist als eins, vorzugsweise zwischen 2 und 1000, insbesondere zwischen 80 und 100.

Die Eigenschaften sowie die Herstellung derartiger Materialien sind dem Fachmann bekannt.

Besonders bevorzugte Beispiele sind Polyamide, die erhalten werden durch Polykondensation von Dicarbonsäuren, wie Oxalsäure, Adipinsäure, Suberinsäure, Sebacinsäure, Terephthalsäure, Isophthalsäure oder 1,4-Cyclohexyldicarbonsäure mit einem Diamin, wie Ethylendiamin, Pentamethylendiamin, Hexamethylendiamin, Decamethylendiamin, 1,4-Cyclohexyldiamin oder m-Xyloldiamin, oder Polyamide erhalten durch Polymerisation von cyclischem Lactam, wie Caprolactam oder Laurolactam und Polyamide erhalten durch Copolymerisation von cyclischem Lactam und einem Dicarbonsäuresalz mit einem Diamin.

Vorteilhaft sind Nylon 6 (Polyamid 6), Nylon 66 (Polyamid 66) und deren Copolymere.

Als Füll- und/oder Verstärkungsstoffe und/oder als Schlagzähmodifikatoren, zum Einsatz in den erfindungsgemäßen Zusammensetzungen geeignet sind im Allgemeinen alle Zusatzstoffe, die in der Polymermatrix in einer separaten Phase vorliegen und deren Oberfläche durch eine chemische Reaktion mit der Polymermatrix kovalent verbunden werden kann. Dabei kann es sich um typische Verstärkungsstoffe, wie Fasern, Bändchen, Folien oder Faser-Flächengebilde handeln, oder um typische Füllstoffe, die hauptsächlich aus wirtschaftlich Gründen eingesetzt werden, beispielsweise um mineralische Füllstoffe, aber auch um Füllstoffe, die eingesetzt werden, um der Zusammensetzung eine gewünschte Eigenschaft zu verleihen, beispielsweise um eine Verstärkungswirkung zu erzielen, sowie um Schlagzähmodifikatoren. Vorteilhaft sind diese Zusätze mit einer Schlichte versehen oder wurden oberflächenbehandelt, um die Anbindung an die Kunststoffmatrix zu verbessern.

Dies ist insbesondere bei mineralischen Füllstoffen und Verstärkungsfasern vorteilhaft der Fall.

Als mineralische Füllstoffe sind vorteilhaft Kreide, Calciumcarbonat, Glaskugeln, hohle Glaskugeln, Talkum, Wollastonit, Lehm, Molybdändisulfid und/oder Graphit einsetzbar.

Als Verstärkungsfasem können vorteilhaft Mineralfasern, wie Glasfasern, Polymerfasern, insbesondere organische Hochmodulfasern, wie Aramidfasern, oder Metallfasern, wie Stahlfasern, oder Kohlenstofffasern eingesetzt werden.

Diese Fasern können modifiziert oder unmodifiziert sein, beispielsweise mit einer Schlichte versehen oder chemisch behandelt, um die Haftung mit dem Kunststoff zu verbessern.

Besonders bevorzugt sind Glasfasern. Zur Behandlung von Glasfasern dienen meist organische Silane, insbesondere Aminosilane. Im Einzelnen können beispielsweise als Aminosilane eingesetzt werden 3-Trimethoxysilyl-propylamin, N-(2-Aminoethyl)-3aminopropyltrimethoxysilan, N-(3-trimethoxy-silanyl-propyl)-ethan-1,2-diamin, 3-(2-aminoethylamino)propyltrimethoxy-silan, N-[3-(trimethoxysilyl)propyl]-1,2-ethandiamin.

Außerdem vorteilhaft verwendbar sind Schlichten, die auf Polyurethanen basieren.

Die Verstärkungsfasem können in den thermoplastischen Kunststoff mit an sich bekannten Verfahren eingearbeitet werden, beispielsweise mittels eines Extruders oder Kneters.

Die Verstärkungsfasem können aber auch vorteilhaft als Endlosfasern in einem hierfür geeigneten Verfahren mit der Formmasse aus thermoplastischem Kunststoff imprägniert oder umhüllt und anschließend als Endlosstrang aufgewickelt, verarbeitet oder auf eine gewünschte Granulatlänge zerschnitten werden, so dass die Faser- und Granulatlängen gleich sind. Ein besonders hierfür geeignetes Verfahren ist beispielsweise das Pultrusionsverfahren.

Die langfaserverstärkte thermoplastische Formmasse kann erfindungsgemäß ein Glasfaserbündel sein, welches mit einer oder mehrerer Schichten des thermoplastischen Matrixpolymeren ummantelt ist, so dass die Fasern nicht imprägniert sind und erst bei der Verarbeitung, beispielsweise im Spritzguss, eine Mischung der Fasern und des thermoplastischen Matrixpolymeren eintritt. Vorteilhaft sind die Fasern jedoch mit dem thermoplastischen Matrixpolymeren imprägniert.

Gemäß einer bevorzugten Ausgestaltung der Erfindung wird die langfaserverstärkte Polyacetal-Formmasse nach dem Pultrusions-Verfahren hergestellt, wobei
i) Faserbündel durch eine flache Düse, die mit einer Schmelze aus mindestens einem thermoplastischen Polymer, mit Ausnahme von Polyacetal, und gegebenenfalls weiteren Zusatzstoffen gefüllt ist, geführt werden,
ii) die eingetauchten Faserbündel über eine Formdüse geführt werden,
iii) die Faserbündel gekühlt werden,
iv) die Faserbündel nachgeformt werden und
v) die Faserbündel quer zur Laufrichtung auf die Länge der Struktur geschnitten oder als endlose Struktur aufgewickelt werden.

Die Imprägnierung der Faserbündel mit dem thermoplastischen Matrixpolymeren, wie beispielsweise durch Pultrusion in Schritt i) des obigen Verfahrens, kann auch nach anderen geeigneten Verfahren erfolgen. Beispielsweise kann die Faserimprägnierung mit einem Verfahren durchgeführt werden, bei dem das Faserbündel von einem thermoplastischen Matrixpolymeren durchtränkt wird, dadurch gekennzeichnet, dass das Faserbündel auf eine Trageeinrichtung aufgelegt wird und dass die Trageeinrichtung zusammen mit dem aufliegenden Faserbündel an einer Imprägniereinrichtung vorbeigeführt wird. Ein solches Verfahren ist in EP-A-756,536 beschrieben.

Die Imprägnierung der Faser kann außerdem nach einem Verfahren erfolgen, bei dem unter Verwendung eines Plastifizierextruders, bei dem ein Faserstrang über Führungsgatter und Vorwärmeinrichtung geführt in einer Imprägniervorrichtung mit flüssigem Thermoplastfilm benetzt wird und anschließend in den Plastifizierextruder eingeführt, darin die einzelnen Fasern zerschnitten und vermischt und als weiterverarbeitbare faserverstärkte thermoplastische Polymermasse ausgetragen wird, gekennzeichnet durch folgende Verfahrensschritte:
a) der Faserstrang wird über Beschichtungsdüsen in die Zuführöffnung des Plastifizierextruders vorzugsweise parallel zu den Extruderachsen und annähernd tangential auf eine Extruderwelle und um die Extruderwellen vortreibend aufgewickelt, sowie in Zylinderbohrungen von im Durchmesser um mindestens die vierfache Stärke des Faserstranges vergrößerte Schneckenzylinder eingezogen,
b) in der Zuführöffnung erfolgt dabei auf eine Flachseite des Faserstranges das Aufbringen eines thermoplastischen Polymerfilms aus der rechten Beschichtungsdüse direkt, während auf die zweite Flachseite das Aufbringen indirekt durch Einpressen des Faserstranges in den vorher aus der linken Beschichtungsdüse auf die Schneckenwelle aufgetragenen flüssigen thermoplastischen Polymerfilm erfolgt dabei wird der Faserstrang innerhalb einer Einzugs- und Imprägnierstrecke mit den einzelnen endlosen Fasern an den Extruderwellen einreibend bzw. durchreibend an beiden Flachseiten mit den flüssigen thermoplastischen Polymerfilmen benetzt bzw. getränkt und
c) anschließend werden die mit thermoplastischem Polymer durchimprägnierten bzw. durchtränkten Einzelfasern bzw. der Faserstrang aus der Einzugs- und lmrägnierstrecke über eine Schneidkante in die im Durchmesser verkleinerten Schneckenzylinder in eine kurze Austrag- und Förderstrecke geführt und hierbei in weitgehend vorbestimmte Längen zerschnitten.

Ein solches Verfahren ist zum Beispiel beschrieben in DE-A-198 36 787.

Bei den beschriebenen erfindungsgemäßen umweltfreundlichen und wirtschaftlichen Verfahren wird eine stäbchenförmige Struktur mit einer bestimmten Form erhalten. Die stäbchenförmige Struktur weist eine Länge von 3 mm bis 100 mm, bevorzugt von 4 mm bis 50 mm und besonders bevorzugt von 5 mm bis 15 mm auf. Die stäbchenförmige Struktur, auch als Granulat bezeichnet, weist im Allgemeinen einen Durchmesser von 1 mm bis 10 mm, von 2 mm bis 8 mm und besonders bevorzugt von 3 mm bis 6 mm auf.

Erfindungsgemäß ist auch ein Verfahren vorgesehen, wobei die Komponenten im Extruder gemischt werden, die Verstärkungsfaser durch die Schmelze benetzt und das gewonnene Material anschließend granuliert wird. Das so gewonnene Granulat kann mit Farbstoff und/oder Pigment vermischt werden und bei einem weiteren Verarbeitungsprozeß zum Bauteil verarbeitet werden.

Die langfaserverstärkte thermoplastische Polymer-Formmasse kann auch erfindungsgemäß nach dem Compoundierverfahren oder nach dem Direktverfahren hergestellt werden. Besonders vorteilhaft wird nach dem Direktverfahren keine stäbchenförmige Struktur erhalten, die in einem weiteren Verfahrensschritt zu einem geformten Gegenstand geformt werden muss, sondern der geformte, mit langen Verstärkungsfasern (die Verstärkungsfasern haben hierbei eine Länge von 3 bis 3 100 mm) verstärkte geformte Gegenstand, wird direkt aus Verstärkungsfasern und dem thermoplastischen Matrixpolymeren erhalten, welches den Katalysator erhält.

Erfindungsgemäß wird ein geformter Gegenstand aus dem geschmolzenen, gegebenenfalls gefärbten langfaserverstärkten thermoplastischen Polymergranulat in an sich bekannter Weise, wie Spritzguss, Extrusion, Blasformen oder Plastifizierpressen geformt.

Die Struktur der langfaserverstärkten thermoplastischen Polymer-Formmasse ist erfindungsgemäß stabförmig, streifenförmig, bandförmig oder flächenförmig. Bevorzugt ist die Stabform, die erhalten wird, in dem die Oberfläche der Faser, daher der zusammengesetzten gebündelten Faser, kontinuierlich parallel angeordnet mit thermoplastischem Polymer zu einem Strang beschichtet werden und dann auf die benötigte Länge geschnitten werden.

Erfindungsgemäß können alle Komponenten, ausgenommen die Verstärkungsfaser, in einem Kneter oder einem Extruder schmelzegemischt werden. Die Temperatur wird auf 5 °K bis 100 °K, bevorzugt auf 10 °K bis 60 °K oberhalb der Schmelztemperatur des höher schmelzenden thermoplastischen Polymers eingestellt. Die Schmelzemischung ist nach einer Zeit von 30 Sekunden bis 15 Minuten, bevorzugt von 1 Minuten bis 10 Minuten abgeschlossen.

Die langfaserverstärkte thermoplastische Polymer-Formmasse kann auch derart beschaffen sein, dass die Fasern im Wesentlichen von dem thermoplastischen Polymer bzw. einem Blend von thermoplastischen Polymeren benetzt sind und der imprägnierte Faserstrang in der Mitte der langfaserverstärkten thermoplastischen Polymer-Formmasse von einer anderen Komponente, vorzugsweise einem unterschiedlichen thermoplastischen Kunststoff oder einem Blend ummantelt ist und die Komponenten an der Oberfläche miteinander verbunden sind. Eine derartige Struktur kann beispielsweise nach einem Verfahren hergestellt werden, welches in US-A-6,090,319 beschrieben wurde.

Eine solche langfaserverstärkte thermoplastische Polymer-Formmasse kann hergestellt werden, indem
- nach der Faserimprägnierung nach einem der oben beschriebenen Verfahren der imprägnierte Faserstrang kontinuierlich aus der Vorrichtung zur Imprägnierung herausgezogen wird;
- das zur Ummantelung der langfaserverstärkten thermoplastischen Polymer-Formmasse vorgesehene Material kontinuierlich aufgeschmolzen und im plastischen Zustand in und der Länge nach durch eine verlängerte Pressform mit einer vollständig offenen, rohrförmigen Passage, in der sich das zur Ummantelung der thermoplastischen Polymer-Formmasse vorgesehene Material befindet, hindurchgepresst wird;
- kontinuierlich der imprägnierte Faserstrang in die erwähnte verlängerte Pressform hinein und hindurch befördert wird, während gleichzeitig das zur Ummantelung des imprägnierten Faserstranges vorgesehene Material hindurchgepresst wird;
- der imprägnierte Faserstrang mit dem geschmolzenen, zur Ummantelung der langfaserverstärkten thermoplastischen Polymer-Formmasse vorgesehenen Material in Kontakt gebracht und beschichtet und eine langfaserverstärkte thermoplastische Polymer-Formmasse erhalten wird, bei der die Fasern im Wesentlichen nur von einer der Komponenten benetzt sind und der imprägnierte Faserstrang in der Mitte der langfaserverstärkten thermoplastischen Polymer-Formmasse von der jeweils anderen Komponente ummantelt ist und die Komponenten an der Oberfläche miteinander verbunden sind;
- die langfaserverstärkte thermoplastische Polymer-Formmasse aus der Pressform kontinuierlich entfernt wird; und
- die Faserbündel quer zur Laufrichtung auf die Länge der Struktur geschnitten oder als endlose Struktur aufgewickelt werden.

Bei Anwendung diese Verfahrens werden die Verstärkungsfasem nach einem bekannten Verfahren, vorzugsweise nach dem Pultrusionsverfahren, mit einer der Komponenten imprägniert, die gegebenenfalls einen oder mehrere weitere Zusatzstoffe enthalten kann. Die erhaltene Struktur wird anschließend mit der anderen Komponente beschichtet, die jeweils auch einen oder mehrere weitere Zusatzstoffe enthalten kann.

Bevorzugt werden die Verstärkungsfasem mit der Komponente benetzt, die vorteilhaft den Katalysator enthält, und der entstehende Strang wird anschließend mit der anderen Komponente umhüllt, wobei auch diese Komponente weitere Zusatzstoffe enthalten kann.

Vorteilhaft enthalten die hier räumlich von einander getrennten Komponenten unterschiedliche weitere Zusatzstoffe.

Erfindungsgemäß wird die thermoplastische Polymer-Formmasse, insbesondere die langfaserverstärkte thermoplastische Polymer-Formmasse zur Herstellung von Formteilen verwendet. Diese Formteile weisen hervorragende mechanische Eigenschaften, insbesondere hervorragende Schlagzähigkeit, eine hohe Wärmeformbeständigkeit und geringe Verformbarkeit auf. Durch den geringen Verzug besitzen die Formteile außerdem eine verbesserte Passgenauigkeit.

Die Formteile können durch die bekannten Verarbeitungsverfahren, wie beispielsweise durch Spritzguss, Pressformen, Blasformen aus den erfindungsgemäßen langfaserverstärkten thermoplastischen Polymer-Formmassen hergestellt werden.

Weitere erfindungsgemäß eingesetzte vorteilhafte Zusatzstoffe sind auch Schlagzähmodifikatoren. Durch die erfindungsgemäß eingesetzten Katalysatoren wird außerdem die Verträglichkeit und die Dispergierfähigkeit der Schlagzähmodifikatoren in der Polymermatrix verbessert, was in höheren Schlagzähigkeiten resultiert.

Dies geschieht indem "in-situ", also während des Schmelzeknetvorgangs, eine Kopplungsreaktionen zwischen dem thermoplastischem Polymeren und verfügbaren Funktionalitäten des Schlagzähmodifikators katalytisch begünstigt wird und damit sozusagen ein Blockcopolymer entsteht, das als Verträglichkeitsmacher über die Phasengrenzfläche hinweg die thermodynamische Mischbarkeit und damit die Verträglichkeit innerhalb der Mischung verbessert.

Schlagzähmodifikatoren werden typischerweise eingesetzt in Mengen von 5 bis 50 Gew. %, bevorzugt 5 bis 40 Gew. %, besonders bevorzugt 7 bis 30 Gew. %. Als Schlagzähmodifikator vorzugsweise einsetzbar sind einzeln oder als Gemisch Polyurethane, zweiphasige Mischungen aus Polybutadien und Styrol/Acrylnitril (ABS), modifizierte Polysiloxane bzw. Silicon-Kautschuke oder Pfropfcopolymere aus einem kautschukelastischen, einphasigen Kern auf Basis von Polydien und einer harten Pfropfhülle (Kern-Hüllen- bzw. Core-Shell-Struktur).

Im letzteren Fall bestehen Schlagzähmodifikatoren aus Partikeln, die überwiegend, vorzugsweise zu mehr als 70 %, eine Kern-Hüllen-Struktur aufweisen. Dabei wird der Kern von einer kautschukelastischen Polymerphase gebildet, auf welche die harte Hülle, die auch aus mehreren Schichten bestehen kann, aufgepfropft ist. Der Kern ist bevorzugt einphasig, das heißt, dass der Kern überwiegend, vorzugsweise vollständig, aus der kautschukelastischen Weichphase besteht und nur in geringen Mengen, vorzugsweise keine, Einschlüsse aus harten Polymerbestandteilen der Hülle enthält. Das Pfropfcopolymer besteht, meist zu 40 bis 95 Gew. %, vorteilhaft zu 60 bis 90 Gew. %., besonders vorteilhaft zu 70 bis 80 Gew. % aus dem kautschukelastischen Kern. Der Anteil der Hülle (Schalen) beträgt 5 bis 60 Gew. %, vorteilhaft 10 bis 40 Gew. %, besonders vorteilhaft 20 bis 30 Gew.-%.

Derartige Schlagzähmodifikatoren und deren Aufbau sind an sich bekannt und beispielsweise in den EP-A-156,285 und EP-A-668,317 beschrieben, auf deren Offenbarung hier ausdrücklich Bezug genommen wird.

Weitere bevorzugt einsetzbare Schlagzähmodifikatoren sind Polyurethane, vorzugsweise thermoplastische Polyurethane. Dabei handelt es sich um bekannte Produkte, die beispielsweise in DE-A-119 32 40, DE-U-205 10 28 und im Kunststoff-Taschenbuch, (Saechtling, 27. Ausgabe, Hanser Verlag 1998) auf den Seiten 523 bis 542 beschrieben sind, worauf Bezug genommen wird.

Sie werden in bekannter Weise durch Polyaddition aus Polyisocyanaten, insbesondere Diisocyanaten, Polyestern, Polyethern, Polyesteramiden, Polyacetalen oder anderen geeigneten Hydroxy- bzw. Aminoverbindungen, wie beispielsweise hydroxyliertem Polybutadien, oder Mischungen aus den vorgenannten Verbindungen hergestellt. Gegebenenfalls werden auch Kettenverlängerer wie niedermolekulare Polyole, insbesondere Diole, Polyamine, insbesondere Diamine oder Wasser eingesetzt.

Die erfindungsgemäß eingesetzten Polyurethane sind vorzugsweise thermoplastisch und damit vorzugsweise im wesentlichen unvernetzt, das heißt wiederholt ohne nennenswerte Zersetzungserscheinungen schmelzbar.

Ihre reduzierten spezifischen Viskositäten, gemessen bei 30°C in Dimethylformamid, liegen in der Regel bei 0,5 bis 3 dl/g, vorzugsweise bei 1-2 dl/g. Die Werte für die Reißdehnungen betragen zweckmäßigerweise 800 bis 1500 %, vorzugsweise 1000 bis 1500 %, während die Shore-Härte A bei höchstens 90, vorteilhaft nicht über 81, vorzugsweise zwischen 50 und 85, besonders bevorzugt zwischen 60 und 80, insbesondere zwischen 65 und 80 und die Glastemperaturen zumeist nicht höher als 0°C, vorteilhaft nicht höher als -10°C, besonders vorteilhaft nicht höher als -20°C liegen.

Die thermoplastischen Formmassen gemäß der Erfindung können optional weitere Additive in Mengen von meist bis zu 40 Gew. % einzeln oder als Gemisch enthalten. Einsetzbar sind beispielsweise tribologische Hilfsmittel, Antioxidantien, wie sterisch gehinderte Phenolverbindungen, UV-Stabilisatoren, wie Benzotriazolderivate und Benzophenonderivate, leitfähigkeitsvermittelnde Zusätze bzw. Antistatike, wie Ruße, insbesondere Leitfähigkeitsruße, Säurefänger, Haftvermittler, Entformungshilfen, Nukleierungsmittel, wie Talk, Farbmittel, wie anorganische Pigmente, zum Beispiel Titandioxid, Ultramarinblau, Kobaltblau, oder organische Pigmente und Farbstoffe, wie Phthalocyanine, Anthrachinone; Gleitmittel, wie Seifen und Ester, beispielsweise Stearylstearat, Montansäureester, teilverseifte Montansäureester; Stearinsäuren, polare und/oder unpolare Polyethylenwachse, Poly-α-Olefin-Oligomere, Silikonöle, Polyalkylenglykole und Perfluoralkylether, Polytetrafluorethylen; oder sonstige Zusätze, wie ultrahochmolekulares Polyethylen und thermoplastische oder duroplastische Kunststoffadditive, Elastomere und weitere Polymere.

### Beispiele

Die folgenden Beispiele sollen die Erfindung für den Fachmann illustrieren und weitere vorteilhafte Ausführungen offenbaren, ohne jedoch den Schutzumfang einzuschränken.

Als Basismaterial wurde für die Versuche 1 bis 7 Polybutylenterephthalt (PBT) der Firma Ticona GmbH eingesetzt. Als weitere Hilfsstoffe wurden 0,65 Gew. % einer Mischung enthaltend Nukleierungsmittel, Antioxidans und Entformungshilfe eingesetzt.

Der Versuch 1 und Versuch 2 sind Vergleichsbeispiele. Die Versuche 3 bis 7 sind Beispiele gemäß der Erfindung.

Als Basismaterial wurde für die Versuche 8 bis 10 Polyethylenterephthalat (PET) der Firma Ticona GmbH eingesetzt. Als weitere Hilfsstoffe wurden 0,6 Gew.-% einer Mischung enthaltend Antioxidans und Entformungshilfe eingesetzt.
Der Versuch 8 ist das Vergleichsbeispiel. Die Versuche 9 und 10 sind Beispiele gemäß der Erfindung.

In Versuch 2 wurde Tetra-n-butyltitanat (IV), in Versuch 3 Kaliumtitanoxidoxalatdihydrat, in Versuch 4 Tetraphenylphosphoniumbromid, in Versuch 5 Stearyltributylphosphoniumbromid, in Versuch 6 Triphenylphosphin und in Versuch 7 Lithiumacetylacetonat als Katalysator verwendet. In den Versuchen 9 und 10 wurde Kaliumtitanoxidoxalatdihydrat als Katalysator verwendet.

Die Mengen in der Tabelle sind in Gewichtsprozent (Gew.-%) angegeben. Zugfestigkeit und Zug-Elastizitätsmodul in MPa, Bruchdehnung in %, Schlagzähigkeiten in kJ/m².

Die Bestandteile wurden zusammen mit Glasfasern vermengt und anschließend in einem Doppelwellenextruder aufgeschmolzen, homogenisiert, als Strang abgezogen und granuliert.

Prüfkörperherstellung: Das Polyestergranulat wurde durch Spritzguss zu Normprüfkörpern verarbeitet und entsprechend den nachfolgend aufgeführten Methoden charakterisiert:

Zugfestigkeit, Bruchdehnung, Zug-E-Modul wurden nach ISO 527 im Zugversuch ermittelt.

Charpy Kerbschlagzähigkeit wurde nach ISO 176-1/eA für eingekerbte Prüfkörper im Schlagzugversuch ermittelt.

Die Viskositätszahl wurde nach ISO 1628-5 unter Verwendung von Dichloressigsäure (DCE) ermittelt. Abweichend von der genannten Norm wurde mit 1,0% statt 0,5% bestimmt. Der MVR wurde nach ISO 1133 bestimmt.
Die Tabellen 1 und 2 enthalten die Zusammensetzungen der Formmassen und die entsprechenden Prüfergebnisse.

**Tabelle 1**

| **Bestandteil / Eigenschaften** | **Methode** | **Einheit** | **1** | **2** | **3** | **4** | **5** | **6** | **7** |
|---|---|---|---|---|---|---|---|---|---|
| PBT | | Gew.-% | 79,35 | 79,28 | 79,28 | 79,28 | 79,28 | 79,28 | 79,28 |
| Zusatzstoffe | | Gew.-% | 0,65 | 0,65 | 0,65 | 0,65 | 0,65 | 0,65 | 0,65 |
| Glasfaser | | Gew.-% | 20 | 20 | 20 | 20 | 20 | 20 | 20 |
| n-Butyltitanat (IV) | | Gew.-% | | 0,07 | | | | | |
| Kalium titanoxid oxalat dihydrat | | Gew.-% | | | 0,07 | | | | |
| P(Ph)4Br | | Gew.-% | | | | 0,07 | | | |
| Stearyltributylphosphoniumbromid | | Gew.-% | | | | | 0,07 | | |
| P(Ph)3 | | Gew.-% | | | | | | 0,07 | |
| Lithiumacetylacetonat | | Gew.-% | | | | | | | 0,07 |
| Viscosity Number | 1% DCE | ml/g | 112,1 | 120,9 | 121,5 | 113,9 | 117,8 | 117,6 | 118,7 |
| MVR | 250/2 | cm³/10min | 16,3 | 15,2 | 15,1 | 23,7 | 18,8 | 15,1 | 17,2 |
| Zugfestigkeit | 5 mm/min | N/mm² | 117 | 122 | 121 | 119 | 121 | 121 | 121 |
| Bruchdehnung | 5 mm/min | % | 2,8 | 2,8 | 2,9 | 2,4 | 2,4 | 2,8 | 2,8 |
| Zug-E-Modul | 1 mm/min | N/mm² | 7062 | 7411 | 7298 | 7412 | 7528 | 7293 | 7271 |
| Kerbschlagzähigkeit (Charpy, 23°C) | notched | kJ/m² | 5,9 | 6,6 | 6,5 | 6,6 | 6,6 | 6,5 | 6,6 |

**Tabelle 2**

| **Bestandteil / Eigenschaften** | **Methode** | **Einheit** | **8** | **9** | **10** |
|---|---|---|---|---|---|
| PET | | Gew.-% | 69,4 | 69,395 | 69,37 |
| Glasfaser | | Gew.-% | 30 | 30 | 30 |
| Zusatzstoffe | | Gew.-% | 0,6 | 0,6 | 0,6 |
| Kalium titanoxid oxalat dihydrat Viscosity Number Pellets | 1% DCE | Gew.-% ml/g | 0 69,4 | 0,005 69,7 | 0,03 71,1 |
| Zugfestigkeit | ISO 527 | MPa | 161 | 164 | 164 |
| Bruchdehnung | ISO 527 | % | 2,08 | 2,09 | 2,14 |
| Zug-E-Modul | ISO 527 | MPa | 10906 | 11002 | 11104 |
| Kerbschlagzähigkeit (Charpy, 23°C) | ISO 179-1/1eA | kJ/m² | 8,5 | 8,5 | 8,4 |

## Patentansprüche

1. Thermoplastische Formmasse enthaltend
a. 20 bis 99 Gew.-% eines thermoplastischen Polymeren, das ausgewählt wird aus der Gruppe bestehend aus Polyolefinen, Polyacrylaten, Polymethacrylaten, durch Polymerisation von Estern und/oder Amiden der Acrylsäure oder Methacrylsäure erhältlichen Polymeren sowie deren Copolymeren, Polyamiden, Polyestern, ausgenommen Polycarbonat, Polyethern, Polythioethern, Polyphenylenoxiden, Polyarylensulfiden oder deren Mischungen,
b. 0,1 Gew.-% - 80 Gew.-% eines Zusatzstoffes ausgewählt aus der Gruppe bestehend aus Füllstoffen, Verstärkungsstoffen, Schlagzähmodifikatoren und deren Gemischen, und
c. 0,00001 bis 1,0 Gew.-% eines Phosphans, Sulfoniumsalzes oder Titanylverbindung und/oder 0,00001 bis 0,03 Gew.-% eines Phosphoniumsalzes oder Ammoniumsalzes oder deren Mischungen als Katalysator, der die Ausbildung von kovalenten Bindungen zwischen dem thermoplastischem Polymeren und der Oberfläche des Zusatzstoffes katalysiert.

2. Thermoplastische Frommasse nach Anspruch 1, **dadurch gekennzeichnet, daß** Komponente c) 0,00001 bis 0,03 Gew.-% eines Katalysators ist, der ausgewählt wird aus der Gruppe bestehend aus Phosphoniumsalzen, Phosphanen, Ammoniumsalzen, Sulfoniomsalzen und deren Mischungen.

3. Thermoplastische langfaserverstärkte Formmasse nach Anspruch 1, **dadurch gekennzeichnet, daß** der Anteil von Komponente a) 20 Gew.-% bis 90 Gew.-% ausmacht, und das Komponente b) 10 Gew.% bis 80 Gew.-% einer Verstärungsfaser ist.

4. Thermoplastische Formmasse nach Anspruch 1, **dadurch gekennzeichnet, dass** ein Katalysator oder eine Mischung von Katalysatoren eingesetzt wird, der Umesterungs-, Umamidierungs- oder Umurethanisierungsreaktionen katalysiert oder der die Ausbildung von Ester-, Amid- und Urethangruppen katalysiert.

5. Thermoplastische Formmasse nach Anspruch 1, **dadurch gekennzeichnet, dass** der Katalysator eine Lewis-Säure ist, die vorzugsweise keine Brönsted-Säure ist.

6. Thermoplastische Formmasse nach Anspruch 1, **dadurch gekennzeichnet, dass** als Zusatzstoff mineralische Füllstoffe, Verstärkungsfasern, Schlagzähmodifikatoren oder deren Mischungen eingesetzt werden.

7. Thermoplastische Formmasse nach Anspruch 1, **dadurch gekennzeichnet, dass** das thermoplastische Polymer ein Polyester ist.

8. Thermoplastische Formmasse nach Anspruch1, **dadurch gekennzeichnet, daß** der Katalysator eine Titanylverbindungen der Struktur [Ml^{P+}]ₛ [TiO]²⁺ [A^{r-}]ₜ ist, worin p 1 oder 2 bedeutet, s 0, 1 oder 2 ist, Ml ein ein- oder zweiwertiges Metall ist, vorzugsweise eine Alkalimetall, A ein r-wertiges Anion, vorzugsweise ein Anion einer ein- oder zweiwertigen Carbonsäure, darstellt, r und t unabhängig voneinander 1 oder 2 bedeuten, wobei der Ausdruck s x p+2 dem Ausdruck r x t entspricht.

9. Thermoplastische Formmasse nach Anspruch 1, **dadurch gekennzeichnet, dass** der Katalysator ein Phosphoniumsalz der allgemeinen Formel II ist 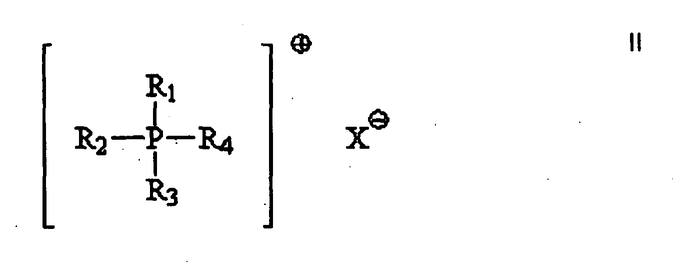 wobei R₁, R₂, R₃ und R₄ gleich oder unterschiedlich sind und einwertige organische Reste, vorzugsweise Alkylreste mit ein bis zwanzig Kohlenstoffatomen, die gegebenenfalls substituiert mit ein oder mehreren Hydroxyl- oder Alkoxygruppen und/oder mit Halogenatomen substituiert sind, aromatische Gruppen, die gegebenenfalls mit ein oder mehreren Hydroxyl- oder Alkoxygruppen und/oder mit Halogenatomen substituiert sind, und/oder araliphatische Gruppen, die gegebenenfalls mit ein oder mehreren Hydroxyl- oder Alkoxygruppen und/oder Halogenatomen substituiert sind, bedeuten und X ein Halogenatom und/oder eine Gruppe -O-R oder -R ist, wobei R Alkyl oder Aryl bedeutet.

10. Thermoplastische Formmasse nach Anspruch 9, **dadurch gekennzeichnet, daß** mindestens einer der Reste R₁ bis R₄ ein Arylrest, bevorzugt ein Phenylrest ist.

11. Thermoplastische Formmasse nach Anspruch 1, **dadurch gekennzeichnet, daß** der Katalysator ein Phosphan der allgemeinen Formel III ist 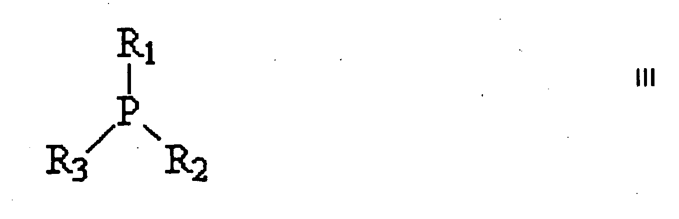 wobei die Reste R₁ bis R₃ gleich oder unterschiedlich sind und einwertige organische Reste, vorzugsweise Alkylreste mit ein bis zwanzig Kohlenstoffatomen, die gegebenenfalls mit ein oder mehreren Hydroxyl-oder Alkoxygruppen und/oder mit Halogenatomen substituiert sind, aromatische Gruppen, die gegebenenfalls mit ein oder mehreren Hydroxyl-oder Alkoxygruppen und/oder mit Halogenatomen substituiert sind, und/oder araliphatische Gruppen, die gegebenenfalls mit ein oder mehreren Hydroxyl-oder Alkoxygruppen und/oder Halogenatomen substituiert sind, bedeuten.

12. Thermoplastische Formmasse nach Anspruch 1, **dadurch gekennzeichnet, dass** der Katalysator ausgewählt wird aus der Gruppe bestehend aus Ethyltriphenylphosphoniumbromid, Tetraphenylphosphoniumbromid, Tetrabutylphosphoniumbromid, Stearyltributylphosphoniumbromid, Triphenylphosphan oder deren Mischungen.

13. Thermoplastische Formmasse nach Anspruch 3, **dadurch gekennzeichnet, dass** die langfaserverstärkte thermoplastische Formmasse ein Glasfaserbündel ist, welches mit einer oder mehrerer Schichten des thermoplastischen Polymeren ummantelt ist, so dass die Fasern mit dem thermoplastischen Polymeren imprägniert sind.

14. Thermoplastische Formmasse nach Anspruch 13, **dadurch gekennzeichnet, dass** die das Glasfaserbündel von dem thermoplastischen Polymer oder einem Blend von thermoplastischen Polymeren benetzt ist und das imprägnierte Glasfaserbündel von einer anderen Komponente ummantelt ist und das imprägnierte Glasfaserbündel und die andere Komponente an der Oberfläche miteinander verbunden sind.

15. Geformter Gegenstand erhältlich durch Formgebung einer thermoplastischen Formmasse nach Anspruch 1.

## Claims

1. Thermoplastic moulding composition comprising
a. from 20 to 99% by weight of a thermoplastic polymer, selected from the group consisting of polyolefins, polyacrylates, polymethacrylates, polymers obtainable via polymerization of esters and/or amides of acrylic acid or methacrylic acid, and also copolymers thereof, polyamides, polyesters, except polycarbonate, polyethers, polythioethers, polyphenylene oxides, polyarylene sulphides and mixtures thereof,
b. from 0.1 to 80% by weight of an additive selected from the group consisting of fillers, reinforcing materials, impact modifiers, and mixtures thereof, and
c. from 0.00001 to 1.0% by weight of a phosphane, sulphonium salt or titanyl compound, and/or from 0.00001 to 0.03% by weight of a phosphonium salt or ammonium salts or a mixture thereof as catalyst which catalyses the formation of covalent bonds between the thermoplastic polymers and the surface of the additive.

2. Thermoplastic moulding composition according to Claim 1, **characterized in that** component c) is from 0.00001 to 0.03% by weight of a catalyst selected from the group consisting of phosphonium salts, phosphanes, ammonium salts, sulphonium salts and mixtures thereof.

3. Thermoplastic long-fibre-reinforced moulding composition according to Claim 1, **characterized in that** the proportion of component a) accounts for from 20% by weight to 90% by weight, and component b) is from 10% by weight to 80% by weight of a reinforcing fibre.

4. Thermoplastic moulding composition according to Claim 1, **characterized in that** a catalyst or a mixture of catalysts is used which catalyzes transesterification, transamidation, or transurethanization reactions, or which catalyzes the formation of ester groups, amide groups, and urethane groups.

5. Thermoplastic moulding composition according to Claim 1, **characterized in that** the catalyst is a Lewis acid which is preferably not a Bronsted acid.

6. Thermoplastic moulding composition according to Claim 1, **characterized in that**, as additive, mineral fillers, reinforcing fibres, impact modifiers or a mixture thereof are used.

7. Thermoplastic moulding composition according to Claim 1, **characterized in that** the thermoplastic polymer is a polyester.

8. Thermoplastic moulding composition according to Claim 1, **characterized in that** the catalyst is a titanyl compound of the structure [MI^{p+}]ₛ[TiO]²⁺[A^{r-}]ₜ, where p is 1 or 2, s is 0, 1 or 2, Ml is a mono- or divalent metal, preferably an alkaline metal, A is an r-valent anion, preferably an anion of the mono- or dibasic carboxylic acid, r and t, independently of one another, are 1 or 2, and s x p+2 is equal to r x t.

9. Thermoplastic moulding composition according to Claim 1, **characterized in that** the catalyst is a phosphonium salt of the formula II 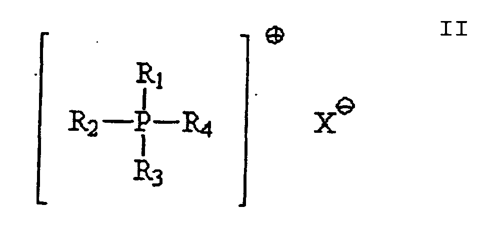 where R₁, R₂, R₃, and R₄ are identical or different and are monovalent organic radicals, preferably alkyl radicals having from 1 to 20 carbon atoms, where appropriate with substitution with one or more hydroxy or alkoxy groups, and/or with halogen atoms, or are aromatic groups, where appropriate with substitution with one or more hydroxy or alkoxy groups and/or with halogen atoms, and/or are araliphatic groups, where appropriate with substitution with one or more hydroxy or alkoxy groups and/or halogen atoms, and X is a halogen atom and/or an -OR or -R group, where R is alkyl or aryl.

10. Thermoplastic moulding composition according to Claim 9, **characterized in that** at least one of the radicals R₁ to R₄ is an aryl radical, preferably a phenyl radical.

11. Thermoplastic moulding composition according to Claim 1, **characterized in that** the catalyst is a phosphane of the formula III 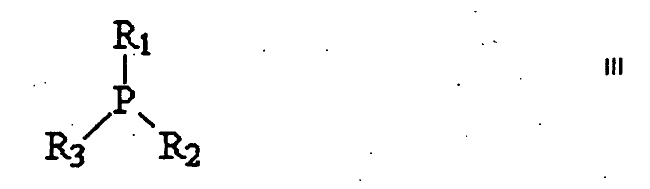 where the radicals R₁ to R₃ are identical or different and are monovalent organic radicals, preferably alkyl radicals having from 1 to 20 carbon atoms, where appropriate with substitution with one or more hydroxy or alkoxy groups, and/or with halogen atoms, or are aromatic groups, where appropriate with substitution with one or more hydroxy or alkoxy groups and/or with halogen atoms, and/or are araliphatic groups, where appropriate with substitution with one or more hydroxy or alkoxy groups and/or halogen atoms.

12. Thermoplastic moulding composition according to Claim 1, **characterized in that** the catalyst is selected from the group consisting of ethyltriphenylphosphonium bromide, tetraphenylphosphonium bromide, tetrabutylphosphonium bromide, stearyltributylphosphonium bromide, triphenyl-phosphane, or their mixtures.

13. Thermoplastic moulding composition according to Claim 3, **characterized in that** the long-fibre-reinforced thermoplastic moulding composition is a glass-fibre bundle which has been sheathed with one or more layers of the thermoplastic polymers so that the fibres have been impregnated with the thermoplastic polymers.

14. Thermoplastic moulding composition according to Claim 13, **characterized in that** the glass-fibre bundle has been wetted by the thermoplastic polymers or by a blend of thermoplastic polymers and the impregnated glass-fibre bundle has been sheathed by another component, and the impregnated glass-fibre bundle and the other component have been bonded to one another at the surface.

15. Moulded article obtainable via shaping of a thermoplastic moulding composition according to Claim 1.

## Revendications

1. Matière à mouler thermoplastique contenant
a. 20 à 99 % en poids d'un polymère thermoplastique qui est choisi dans le groupe constitué par les polyoléfines, les polyacrylates, les polyméthacrylates, les polymères pouvant être obtenus par polymérisation d'esters et/ou d'amides de l'acide acrylique ou méthacrylique ainsi que leurs copolymères, les polyamides, les polyesters, à l'exception du polycarbonate, les polyéthers, les polythioéthers, les polyoxyphénylènes, les poly(sulfure d'arylène)s ou des mélanges de ceux-ci,
b. 0,1 % en poids - 80 % en poids d'un additif choisi dans le groupe constitué par des charges, des renforts, des modificateurs antichoc et des mélanges de ceux-ci, et
c. 0,00001 à 1,0 % en poids d'un phosphane, d'un sel de sulfonium ou d'un composé de titane et/ou 0,00001 à 0,3 % en poids d'un sel de phosphonium ou d'un sel d'ammonium ou de mélanges de ceux-ci en tant que catalyseur qui catalyse la formation de liaisons covalentes entre le polymère thermoplastique et la surface de l'additif.

2. Matière à mouler thermoplastique selon la revendication 1, **caractérisée en ce que** le composant c) consiste en 0,00001 à 0,03 % en poids d'un catalyseur qui est choisi dans le groupe constitué par des sels de phosphonium, des phosphanes, des sels d'ammonium, des sels de sulfonium et des mélanges de ceux-ci.

3. Matière à mouler thermoplastique renforcée avec des fibres longues selon la revendication 1, **caractérisée en ce que** la proportion du composé a) va de 20 % en poids à 90 % en poids et le composant b) consiste en 10 % en poids à 80 % en poids d'une fibre de renforcement.

4. Matière à mouler thermoplastique renforcée avec des fibres longues, selon selon la revendication 1, **caractérisée en ce qu'**on utilise un catalyseur ou un mélange de catalyseurs, qui catalyse des réactions de transestérification, transamidation ou transuréthannisation ou qui catalyse le formation de groupes ester, amide et uréthanne.

5. Matière à mouler thermoplastique selon la revendication 1, **caractérisée en ce que** le catalyseur est un acide de Lewis, qui de préférence n'est pas un acide de Brönsted.

6. Matière à mouler thermoplastique selon la revendication 1, **caractérisée en ce qu'**on utilise comme additif des charges minérales, des fibres de renforcement, des modificateurs antichoc ou des mélanges de ceux-ci.

7. Matière à mouler thermoplastique selon la revendication 1, **caractérisée en ce que** le polymère thermoplastique est un polyester.

8. Matière à mouler thermoplastique selon la revendication 1, **caractérisée en ce que** le catalyseur représente un composé titanyle de structure [Ml^{p+}]ₛ [TiO]²⁺ [A^{r-}]ₜ, dans laquelle p représente 1 ou 2, s est 0, 1 ou 2, Ml représente un métal mono- ou divalent, de préférence un métal alcalin, A représente un anion r-valent, de préférence un anion d'un acide carboxylique mono-ou divalent, r et t représentent, indépendamment l'un de l'autre, 1 ou 2, l'expression s x p+2 correspondant à l'expression r x t.

9. Matière à mouler thermoplastique selon la revendication 1, **caractérisée en ce que** le catalyseur est un sel de phosphonium de formule générale II 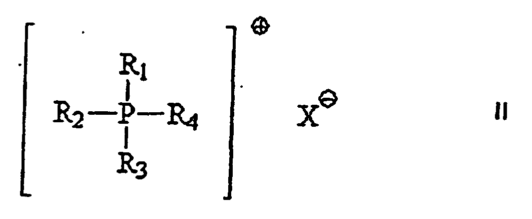 dans laquelle R₁, R₂, R₃ et R₄ sont identiques ou différents et représentent des radicaux organiques monovalents, préférablement des radicaux alkyle ayant de un à vingt atomes de carbone, qui sont éventuellement substitués par un ou plusieurs groupes hydroxy ou alcoxy et/ou par des atomes d'halogène, des groupes aromatiques qui sont éventuellement substitués par un ou plusieurs groupes hydroxy ou alcoxy et/ou par des atomes d'halogène, et/ou des groupes araliphatiques qui sont éventuellement substitués par un ou plusieurs groupes hydroxy ou alcoxy et/ou des atomes d'halogène, et X représente un atome d'halogène et/ou un groupe -OR ou -R, R représentant un groupe alkyle ou aryle.

10. Matière à mouler thermoplastique selon la revendication 9, **caractérisée en ce qu'**au moins l'un des radicaux R₁ à R₄ est un radical aryle, de préférence un radical phényle.

11. Matière à mouler thermoplastique selon la revendication 1, **caractérisée en ce que** le catalyseur est un phosphane de formule générale III 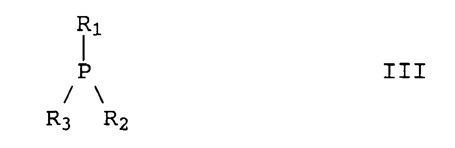 dans laquelle les radicaux R₁ à R₃ sont identiques ou différents et représentent des radicaux organiques monovalents, préférablement des radicaux alkyle ayant de un à vingt atomes de carbone, qui sont éventuellement substitués par un ou plusieurs groupes hydroxy ou alcoxy et/ou par des atomes d'halogène, des groupes aromatiques qui sont éventuellement substitués par un ou plusieurs groupes hydroxy ou alcoxy et/ou par des atomes d'halogène, et/ou des groupes araliphatiques qui sont éventuellement substitués par un ou plusieurs groupes hydroxy ou alcoxy et/ou des atomes d'halogène.

12. Matière à mouler thermoplastique selon la revendication 1, **caractérisée en ce que** le catalyseur est choisi dans le groupe constitué par le bromure d'éthyltriphénylphosphonium, le bromure de tétraphénylphosphonium, le bromure de tétrabutylphosphonium, le bromure de stéaryltributylphosphonium, le triphénylphosphane ou des mélanges de ceux-ci.

13. Matière à mouler thermoplastique selon la revendication 3, **caractérisée en ce que** la matière à mouler thermoplastique renforcée avec des fibres longues est un faisceau de fibres de verre, qui est enrobé d'une ou plusieurs couches des polymères thermoplastiques, de sorte que les fibres sont imprégnées avec les polymères thermoplastiques.

14. Matière à mouler thermoplastique selon la revendication 13, **caractérisée en ce que** le faisceau de fibres de verre est imprégné par le polymère thermoplastique ou par un mélange de polymères thermoplastiques et le faisceau de fibres de verre imprégné est enrobé avec un autre composant, et le faisceau de fibres de verre imprégné et l'autre composant sont liés l'un à l'autre sur la surface.

15. Objet moulé pouvant être obtenu par formage d'une matière à mouler thermoplastique selon la revendication 1.
